(19) **Europäisches Patentamt / European Patent Office / Office européen des brevets**

(11) **EP 3 276 788 A1**

(12) **EUROPEAN PATENT APPLICATION**
published in accordance with Art. 153(4) EPC

(43) Date of publication:
**31.01.2018 Bulletin 2018/05**

(21) Application number: **16772540.7**

(22) Date of filing: **24.03.2016**

(51) Int Cl.:
**H02J 13/00** (2006.01)   **H02J 3/12** (2006.01)

(86) International application number:
**PCT/JP2016/059360**

(87) International publication number:
**WO 2016/158659 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.03.2015 JP 2015067384**

(71) Applicant: **Kabushiki Kaisha Toshiba**
**Minato-ku**
**Tokyo 105-8001 (JP)**

(72) Inventors:
• **IWABUCHI Kazunori**
**Tokyo 105-8001 (JP)**
• **KIMURA Misao**
**Tokyo 105-8001 (JP)**
• **KINOSHITA Yoshihito**
**Tokyo 105-8001 (JP)**
• **TOYOSHIMA Ichiro**
**Tokyo 105-8001 (JP)**
• **SHINDE Yuya**
**Tokyo 105-8001 (JP)**
• **OZAKI Yukihiro**
**Tokyo 105-8001 (JP)**
• **TAKEDA Daisuke**
**Tokyo 105-8001 (JP)**
• **SASAKI Koji**
**Tokyo 105-8001 (JP)**

(74) Representative: **Awapatent AB**
**Junkersgatan 1**
**582 35 Linköping (SE)**

(54) **POWER DISTRIBUTION MONITORING CONTROL DEVICE**

(57)   A power distribution monitoring and control device of an embodiment includes an acquirer and a representative sensor selector. The acquirer acquires a voltage measurement value measured by a plurality of sensors having a communication function installed in a power distribution system. The representative sensor selector selects one or more representative sensors in which the voltage measurement value has a high degree of similarity with that of other sensors installed in the power distribution area from one or more sensors installed in a power distribution area in the power distribution system by referring to the voltage measurement value acquired by the acquirer.

FIG. 2

**Description**

[Technical Field]

Embodiments of the present invention relate to a power distribution monitoring and control device.

[Background Art]

A power distribution system that supplies power to consumers includes, for example, a high voltage distribution system (an MV system) of a 6 to 20 kV class and a low voltage distribution system (an LV system) of a 100 to 400 kV class. Further, the power distribution system branches from a power distribution substation feeder to a plurality of low voltage distribution systems through a high voltage distribution system and supplies power to respective low voltage consumers via the low voltage distribution systems. In this power distribution system, it is necessary to manage a voltage fluctuation of the low voltage distribution systems, for example, to within 5 to 10%, but indirectly monitoring and controlling the voltages of the low voltage distribution systems by maintaining the voltage fluctuation of the high voltage distribution system, for example, in a range of about 2 to 3%, is performed instead of directly monitoring and controlling the voltage of the low voltage distribution systems.

In recent years, a small distributed power supply using renewable energy such as sunlight or wind power has been introduced to such power distribution systems, and a voltage fluctuation of the power distribution system tends to expand accordingly. Further, introduction of an energy management system that supports energy conservation activities of consumers or an increase in charging facilities of an electric vehicle can be a factor causing the voltage fluctuation to be difficult to predict in the power distribution system.

Meanwhile, a smart meter has been introduced at a desired place for each consumer or power distribution system for the main purpose of improving efficiency of meter reading work for power usage. Further, an advanced metering infrastructure (AMI) that is a communication infrastructure including a smart meter, a meter data management system (MDMS) that is a data management system, and a transfer path that connects these has been developed. This AMI can collect a power amount measurement value using the smart meter installed for each consumer or the like, for example, at sampling intervals of 15 minutes to 60 minutes. Accordingly, the AMI has been utilized to support energy saving of consumers based on "visualization" of the amount of power consumption. Further, an AMI having a bidirectional communication function capable of instructing, from the MDMS to the smart meter, an operation of starting and stopping power supply to a consumer, transmission of a voltage measurement value, or the like is also used.

Based on this, a technology of using a smart meter of each consumer as a low voltage sensor of a low voltage distribution system and using the smart meter for voltage control is known with respect to the background. For example, a technology of selecting a representative sensor on the basis of a voltage deviation from a voltage management range of a low voltage distribution system or measurement of a maximum value or a minimum value of a voltage in a certain period is known. In this technology, the measurement value of the voltage of the representative sensor is acquired at regular intervals using an AMI that enables bidirectional communication, a maximum value and a minimum value of a voltage distribution of a target power distribution system are monitored, and voltage regulation is performed by a low voltage regulation transformer (low voltage regulator (LVR)), a line voltage regulator (SVR), or the like so that this voltage distribution is in a voltage management range.

However, in the related art, since a smart meter that has measured the maximum value or the minimum value is selected as the representative sensor, a smart meter that tends to output a standard measurement value cannot be selected from among a group of smart meters, and a measurement value suitable for monitoring of a distribution of a distribution voltage may not be obtained in some cases.

Further, when the smart meter that has measured the maximum value or the minimum value of the voltage is changed over time, since the number of representative sensors is correspondingly increased, a communication load for acquisition of the voltage measurement value of the representative sensor is increased in some cases.

[Citation List]

[Patent Literature]

[Patent Literature 1]
International Publication No. 2010/129691

[Summary of Invention]

[Technical Problem]

An object to be solved by the present invention is to provide a power distribution monitoring and control device capable of selecting a representative sensor that outputs a voltage measurement value suitable for monitoring of distribution of a distribution voltage.

[Solution to Problem]

A power distribution monitoring and control device of an embodiment includes an acquirer and a representative sensor selector. The acquirer acquires a voltage measurement values measured by a plurality of sensors having a communication function installed in a power distribution system. The representative sensor selector selects one or more representative sensors in which the voltage measurement value has a high degree of similarity with that of other sensors installed in the power distribution area from one or more sensors installed in a power distribution area in the power distribution system by referring to the voltage measurement values acquired by the acquirer.

[Brief Description of Drawings]

Fig. 1 is a diagram illustrating an example of a use environment of a power distribution monitoring and control device 100 according to a first embodiment.

Fig. 2 is a functional configuration diagram of the power distribution monitoring and control device 100 according to the first embodiment.

Fig. 3 is a flowchart illustrating an example of a flow of a representative sensor selection process that is executed by a representative sensor selector 130 and a monitoring controller 140 according to the first embodiment.

Fig. 4 is a diagram illustrating an example of a power distribution area EA that is determined by a power distribution area determiner 120 according to the first embodiment.

Fig. 5 is a diagram illustrating time-series data of voltage measurement values measured by smart meters 22A, 22B, 22C, and 22D in the form of a graph.

Fig. 6 is a diagram illustrating an example of a correlation coefficient rij calculated on the basis of the time-series data.

Fig. 7 is a diagram illustrating an average of a correlation coefficient rij for each of the smart meters 22A, 22B, 22C, and 22D in the form of a graph.

Fig. 8 is a diagram illustrating a state in which a voltage measurement value y of a smart meter 22 that is not a representative sensor is obtained on the basis of a voltage measurement value x of the smart meter 22 that is the representative sensor using a regression equation.

Fig. 9 is a flowchart illustrating an example of a flow of a process that is executed by the monitoring controller 140 according to the first embodiment.

Fig. 10 is a diagram illustrating an example of the use environment of a power distribution monitoring and control device 100A according to a second embodiment.

[Description of Embodiments]

Hereinafter, a power distribution monitoring and control device of an embodiment will be described with reference to the drawings.

(First embodiment)

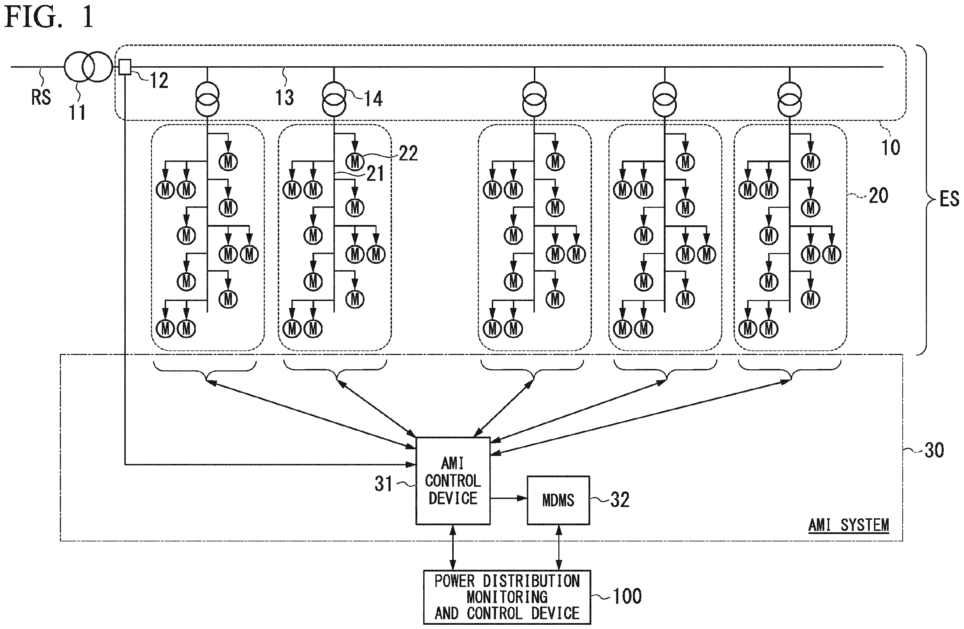

Fig. 1 is a diagram illustrating an example of a use environment of a power distribution monitoring and control device 100 according to a first embodiment. A power distribution system ES to be monitored and controlled by the power distribution monitoring and control device 100 according to the embodiment includes a high voltage distribution system (MV system) 10 and a low voltage distribution system (LV system) 20. Power supplied from a trunk transmission power system RS is supplied to the low voltage distribution system 20 via the high voltage distribution system 10.

The power supplied from the trunk transmission power system RS is transmitted from a transmission feeder of a power distribution transformer 11 to a pole transformer (LV transformer) 14 via a high voltage distribution line 13. A transmission point measurement device 12 is attached at a transmission point of the high voltage distribution line 13. Power transformed to a low voltage by the pole transformer 14 is supplied to low voltage consumers via low voltage distribution lines 21. A smart meter (sensor) 22 is installed for some or all of the low voltage consumers.

Each smart meter 22 automatically transmits measurement data to a bidirectional AMI system 30, for example, at a sampling interval of any one of 15 minutes, 30 minutes, and 60 minutes. The bidirectional AMI system 30 includes a transfer path for connecting the smart meter 22 and the AMI control device 31 to the smart meters 22, in addition to the AMI control device 31 and the meter data management device (MDMS) 32. The AMI control device 31 collects energy accumulation measurement data of each smart meter 22 using an AMI communication function. The measurement data of the smart meter 22 includes, for example, identification information of the low voltage consumer, a measurement time, and the power amount integrated measurement value.

Further, when the AMI control device 31 instructs each smart meter 22 to transmit the voltage measurement value, the instructed smart meter 22 transmits the voltage measurement value to the AMI control device 31, and the AMI control device 31 collects the voltage measurement value. The collection of the voltage measurement value is performed, for example, at a frequency of about once every several hours so that a communication load does not become high.

Further, in the case of this embodiment, the AMI control device 31 instructs specific smart meters 22 (representative sensors) narrowed down from all the smart meters 22 to transmit the voltage measurement value at a higher frequency in response to a request from the power distribution monitoring and control device 100. The smart meter 22 has been exemplified as a means for measuring a voltage within the power distribution system ES, but the present invention is not limited thereto and any type of voltage sensor may be used.

The measurement data of the smart meter 22 collected by the AMI control device 31 is sent to and stored in the meter data management device 32. The meter data management device 32 includes a storage device such as a hard disk drive (HDD) or a flash memory, and stores various pieces of data acquired from the AMI control device 31.

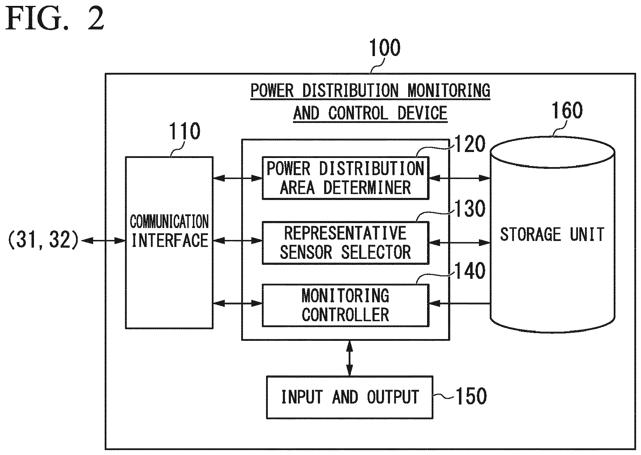

Fig. 2 is a functional configuration diagram of the power distribution monitoring and control device 100 according to the first embodiment. The power distribution monitoring and control device 100 includes, for example, a communication interface 110, a power distribution area determiner 120, a representative sensor selector 130, a monitoring controller 140, an input and output 150, and a storage unit 160. The power distribution area determiner 120, the representative sensor selector 130, and the monitoring controller 140 are, for example, software functional units that function by a processor such as a central processing unit (CPU) executing a program stored in the storage unit 160. Further, some or all of the functional units may be hardware functional units such as a large scale integration (LSI) or application specific integrated circuit (ASIC).

The communication interface 110 is a communication interface for connecting to a network such as a wide area network (WAN) or a local area network (LAN) built between the power distribution monitoring and control device 100 and the AMI control device 31 or the meter data management device 32. The power distribution monitoring and control device 100 and the AMI control device 31 or the meter data management device 32 may be connected via a dedicated line, such as a serial bus. Further, the power distribution monitoring and control device 100 may be integrated into the AMI control device 31 or the meter data management device 32.

The power distribution area determiner 120 refers to the voltage measurement value measured by the smart meter 22 and acquired by the communication interface 110 to determine a power distribution area as a unit area that is a monitoring target of the monitoring controller 140 in the power distribution system ES.

The representative sensor selector 130 refers to the voltage measurement value measured by the smart meter 22 and acquired by the communication interface 110 to select one or more representative sensors in which voltage measurement values have a high degree of similarity with those of other sensors from among one or more smart meters 22 installed within the power distribution area in the power distribution system ES.

The monitoring controller 140 monitors the voltage measurement values of the representative sensors selected by the representative sensor selector 130 to perform voltage monitoring of the power distribution system ES.

The input and output 150 includes, for example, a display device such as a liquid crystal display (LCD) or an organic electroluminescence (EL) display device, and an input unit such as a keyboard, a mouse, or a touch panel. Further, the input and output 150 may include a sound output such as a speaker or a buzzer.

The storage unit 160 includes, for example, a random access memory (RAM), a read only memory (ROM), an HDD, or a flash memory. At least a portion of the storage unit 160 may be an external device, when viewed from the power distribution monitoring and control device 100, that uses a network attached storage (NAS) device or the like.

[Selection of representative sensor]

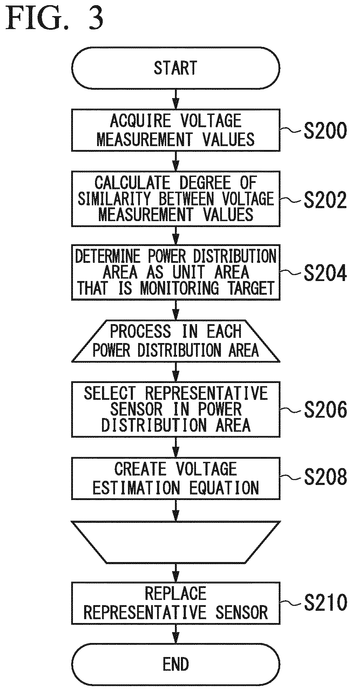

Hereinafter, functions of the power distribution area determiner 120, the representative sensor selector 130, and the monitoring controller 140 will be described. Fig. 3 is a flowchart illustrating an example of a flow of a representative sensor selection process that is executed by the representative sensor selector 130 and the monitoring controller 140 according to the first embodiment. The process of this flowchart is performed, for example, at a frequency of about once every several months automatically or according to an execution instruction to the input and output 150.

First, the power distribution area determiner 120 acquires time-series data of the voltage measurement value of the smart meter 22 stored by the meter data management device 32 (step S200). Hereinafter, it is assumed that there are m smart meters 22 and the following definitions are used in the description. In an equation, n indicates a sampling number. When data corresponding to 24 hours is acquired at measurement sampling intervals of 15 minutes, n = 96. Although the voltage measurement value may be used as it is as the time-series data, the time-series data may be a value converted to be suitable for a process by performing a normalization process. Further, with respect to the smart meter 22 in which there is a missing part or the like in some or all of the time-series data, the power distribution monitoring and control device 100 may perform the following process on data other than such measured time-series data. Unless a place at which the smart meter 22 measures the voltage is a point at which a peculiar voltage fluctuation occurs, no particular problem arises.

Time-series data of the voltage measurement value of the first smart meter 22: X11, X12, ..., X1n

Time-series data of the voltage measurement value of the second smart meter 22: X21, X22, ..., X2n

Time-series data of the voltage measurement value of the m-th smart meter 22: Xm1, Xm2, ..., Xmn

Next, the power distribution area determiner 120 calculates a degree of similarity between the pieces of time-series data of the voltage measurement values of the smart meters 22 (step S202). The representative sensor selector 130, for example, calculates a Pearson product-moment correlation coefficient Rij as the degree of similarity between the pieces of time-series data of the voltage measurement values of the smart meters 22. The Pearson product-moment correlation coefficient Rij is expressed by Equation (1). Arguments i and j indicate which of the smart meters 22 is referred to. Further, a line above Xi or Xj indicates an arithmetic average of Xi or Xj, that is, an arithmetic average of the voltage measurement value (time-series data) of the i-th or j-th smart meter 22. A geometric average or a harmonic average may be used instead of the arithmetic average.

[Math. 1]

$$R_{ij} = \frac{\sum_{k=1}^{n}\left(X_{ik} - \overline{X}_i\right)\left(X_{jk} - \overline{X}_j\right)}{\sqrt{\sum_{k=1}^{n}\left(X_{ik} - \overline{X}_i\right)^2}\sqrt{\sum_{k=1}^{n}\left(X_{jk} - \overline{X}_j\right)^2}} \qquad \cdots (1)$$

Next, the power distribution area determiner 120 converts the Pearson product-moment correlation coefficient Rij expressed by Equation (1) into an index value Dij indicating dissimilarity using Equation (2).

[Math. 2]

$$D_{ij} = 2 \times \left(1 - R_{ij}\right) \qquad \cdots (2)$$

The power distribution area determiner 120 performs, for example, cluster analysis using the index value Dij and groups the time-series data having a high degree of similarity to group the smart meters 22 related to the time-series data. Accordingly, the power distribution area determiner 120 determines a power distribution area as a unit area that is a monitoring target of the monitoring controller 140 in the power distribution system ES (step S204).

The power distribution area determiner 120 may perform either hierarchical cluster analysis or non-hierarchical cluster analysis, but hierarchical cluster analysis capable of classification according to a level of voltage fluctuation is preferably used for the power distribution system ES in which a city center in which an average electrical distance is short and a suburb portion in which the average electrical distance is relatively long coexist. Further, although the Pearson product-moment correlation coefficient Rij is exemplified as the index value indicating the dissimilarity, a Euclidean distance, a Manhattan distance, a Mahalanobis's general distance, or the like may be calculated as the index value indicating the dissimilarity and used for a determination of the power distribution area. However, in order to enable the dissimilarity between the pieces of time-series data of the voltage measurement value to be reflected, the Pearson product-moment correlation coefficient Rij shown in Equation (2) is suitably used.

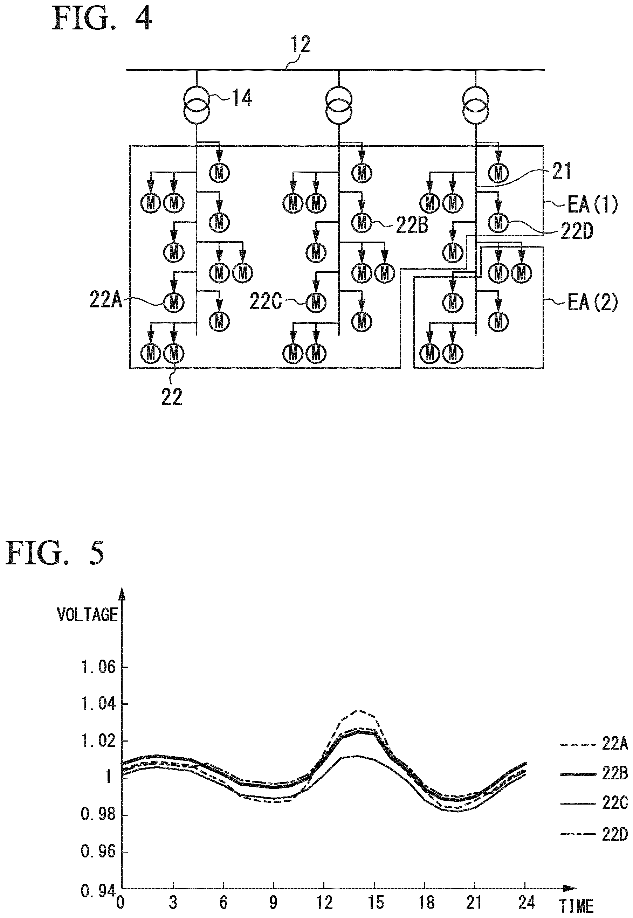

Fig. 4 is a diagram illustrating an example of the power distribution area EA that is determined by the power distribution area determiner 120 according to the first embodiment. In Fig. 4, two power distribution areas EA(1) and EA(2) are determined. As illustrated, the power distribution area EA extends over a plurality of low voltage distribution systems or is included in one low voltage distribution system. Reference numerals 22A to 22D in Fig. 4 are used in the following description.

Then, the representative sensor selector 130 and the monitoring controller 140 execute processes of steps S206 and S208 for each power distribution area EA. First, the representative sensor selector 130 determines a representative sensor in the power distribution area EA (step S206). First, the representative sensor selector 130 calculates a correlation coefficient rij between time-series data of a voltage measurement value measured by the i-th smart meter 22 in a certain distribution area and time-series data of a voltage measurement value measured by the j-th smart meter 22 as a degree of similarity between the time-series data. The correlation coefficient rij is calculated according to Equation (3). Here, although the correlation coefficient rij is exemplified as the same content as the Pearson product-moment correlation coefficient Rij, the calculation of the degree of similarity for a power distribution area determination and the calculation of the degree of similarity for representative sensor selection may be performed according to different schemes.
[Math. 3]

$$r_{ij} = \frac{\sum\limits_{k=1}^{n}(x_{ik} - \bar{x}_i)(x_{jk} - \bar{x}_j)}{\sqrt{\sum\limits_{k=1}^{n}(x_{ik} - \bar{x}_i)^2}\sqrt{\sum\limits_{k=1}^{n}(x_{jk} - \bar{x}_j)^2}} \quad \cdots (3)$$

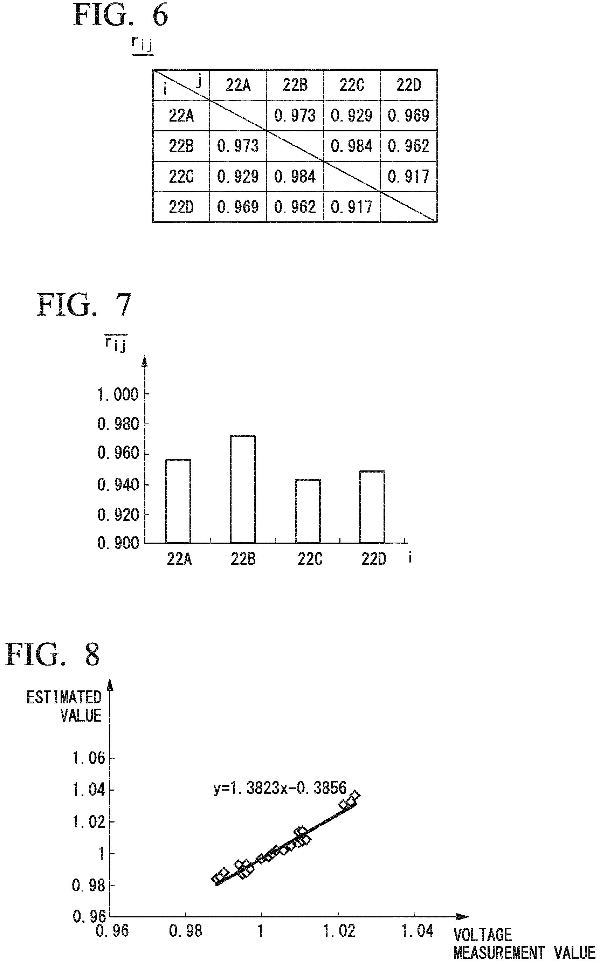

In the following description, it will be assumed that the smart meters 22A, 22B, 22C, and 22D illustrated in Fig. 4 are included in the certain power distribution area EA. Fig. 5 is a diagram illustrating the time-series data of the voltage measurement values measured by the smart meters 22A, 22B, 22C, and 22D in the form of a graph. Fig. 6 is a diagram illustrating an example of the correlation coefficient rij calculated on the basis of the time-series data. The representative sensor selector 130, for example, obtains an average of the correlation coefficients rij, which is obtained when the smart meter 22 is the i-th smart meter for each smart meter 22. Fig. 7 is a diagram illustrating the average of the correlation coefficient rij for each of the smart meters 22A, 22B, 22C, and 22D in the form of a graph. The representative sensor selector 130, for example, selects the smart meter 22 (the smart meter 22B in the example of Fig. 7) for which the obtained average value is largest as the representative sensor.

Through such a process, the representative sensor that outputs the voltage measurement value suitable for monitoring of a distribution of a distribution voltage can be selected. This is because the smart meter 22 that outputs the voltage measurement value having a high degree of similarity with the voltage measurement value of the other smart meter 22 has a tendency to output a voltage measurement value fluctuating representatively or on average in a group of smart meters 22, and by monitoring this voltage measurement value, it is possible to accurately estimate a voltage measurement value of the smart meter 22 that is not the representative sensor to a certain extent.

Next, the monitoring controller 140 constitutes a regression equation (voltage estimation equation) having the voltage measurement values xp1t, xp2t, ... of the representative voltage sensors p1, p2, ... as explanatory variables and a measurement value xit of each of the smart meters 22 other than the representative voltage sensors as an objective variable (step S208). For example, the monitoring controller 140 obtains coefficients a1i, a2i, ... of the regression equation that is expressed by Equation (4). In the equation, bi is an offset component appearing in the voltage measurement value of the i-th smart meter 22.

$$xi = a1i \cdot xp1 + a2i \cdot xp2 + ... + bi \cdots (4)$$

Here, when there is one representative voltage sensor, a regression equation based on a single regression analysis is obtained. However, when there are two or more representative sensors or when a tidal current to the power distribution area EA can be measured, the voltage estimation equation may be created by a regression equation using a multiple regression analysis. Fig. 8 is a diagram illustrating a state in which a voltage measurement value y of the smart meter 22 that is not the representative sensor is obtained by the regression equation on the basis of a voltage measurement value x of the smart meter 22 that is the representative sensor using the single regression analysis.

Then, the monitoring controller 140 proceeds to monitoring using the representative sensor selected in step S206. That is, the monitoring controller 140 performs replacement of the representative sensor that is used in monitoring and control (step S210). The process of step S210 is performed in a time zone in which a fluctuation width of the distribution voltage is narrow (for example, late night or early morning) in order to prevent discontinuity in the monitoring and control from occurring.

[Monitoring and control]

The monitoring controller 140 monitors the voltage distribution in each power distribution area EA on the basis of the voltage measurement value of the representative sensor selected as described above. The monitoring controller 140, for example, estimates the voltage measurement value of the smart meter 22 that is not the representative sensor in each power distribution area EA, and monitors the voltage distribution in each power distribution area EA on the basis of the voltage measurement value of the smart meter 22 that is the representative sensor and the estimated value of the voltage measurement value of the smart meter 22 that is not the representative sensor.

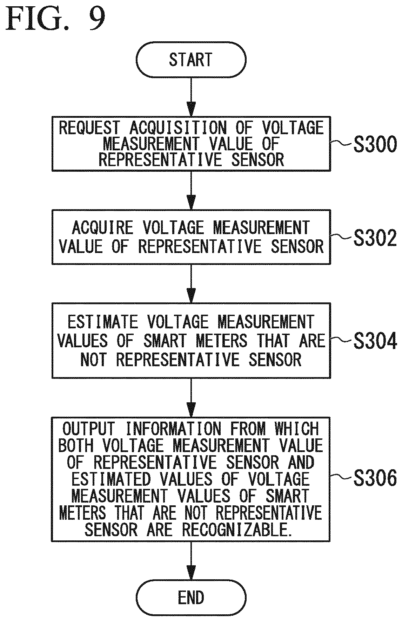

Fig. 9 is a flowchart illustrating an example of a flow of a process that is executed by the monitoring controller 140 according to the first embodiment. The process of this flowchart is performed at a higher frequency (for example, every several minutes to several tens of minutes) than the process of selecting a representative sensor.

First, the monitoring controller 140 designates the smart meter 22 that is the representative sensor to the AMI control device 31 via the communication interface 110, and requests acquisition of the voltage measurement value of the smart meter 22 as the representative sensor (step S300). As described above, the AMI control device 31 instructs the smart meter 22 that is the representative sensor designated by the monitoring controller 140 to transmit the voltage measurement value, and transfers the voltage measurement value with which it replies to the power distribution monitoring and control device 100.

Then, the monitoring controller 140 acquires the voltage measurement value of the smart meter 22 that is the representative sensor from the AMI control device 31 via the communication interface 110 (step S302).

Then, the monitoring controller 140 estimates the voltage measurement value of the smart meters 22 that are not the representative sensor using the voltage estimation equation created in step S208 of the representative sensor selection process (step S304). The monitoring controller 140 outputs information from which both the voltage measurement value acquired in step S302 and the voltage measurement values estimated in step S304 are recognizable to the input and output 150 (step S306). The monitoring controller 140 may output information from which the voltage measurement value estimated in step S304 is recognizable to the input and output 150 (step S306). The input and output 150 displays, for example, the voltage measurement values (including both the actual measurement value and the estimated value) of each smart meter 22 as exemplified in Fig. 5 in the form of a graph or the like using the display unit.

Further, the monitoring controller 140, for example, controls the input and output 150 so that the input and output 150 performs an alert display or sound output with respect to the smart meters 22 including both the smart meter 22 that is the representative sensor and the smart meter 22 that is not the representative sensor when any one of the voltage measurement values (including both the actual measurement values and the estimated values) exceeds an upper limit value or falls below a lower limit value. Accordingly, it is possible to perform control so that the distribution voltage within the power distribution area falls within a desired range.

Further, when the voltage measurement value of the smart meter 22 that is the representative sensor exceeds the upper limit value or falls below the lower limit value, the monitoring controller 140 may control the input and output 150 so that the input and output 150 performs an alert display or sound output. In this case, it is preferable for the upper limit value and the lower limit value to be set within a narrower range than the upper limit value and the lower limit value that are provided for both the actual measurement value and the estimated value. Accordingly, it is possible to perform control so that the distribution voltage in the power distribution area falls within a desired range, simply by using the voltage measurement value of the smart meter 22 that is the representative sensor.

According to the power distribution monitoring and control device 100 of the first embodiment described above, it is possible to select the representative sensor that outputs the voltage measurement value suitable for monitoring of the distribution of the distribution voltage.

Further, according to the power distribution monitoring and control device 100 of the first embodiment, it is possible to perform voltage monitoring of the low voltage distribution system by utilizing the smart meter 22 and the bidirectional AMI system 30 without using detailed information on a configuration of the power distribution system, tidal current calculation, or the like.

Further, according to the power distribution monitoring and control device 100 of the first embodiment, it is possible to monitor the distribution of the distribution voltage in more detail by estimating the voltage measurement value of the smart meter 22 that is not the representative sensor through the regression analysis.

Further, according to the power distribution monitoring and control device 100 of the first embodiment, it is possible to shorten a monitoring period and perform voltage monitoring with good response characteristics even when a communication load is limited since the number of representative sensors can be made smaller than the number of smart meters 22.

In the first embodiment, a configuration in which a predetermined area (or an area input by an operator) is treated as the power distribution area EA, and the power distribution area determiner 120 is omitted may be adopted.

(Second embodiment)

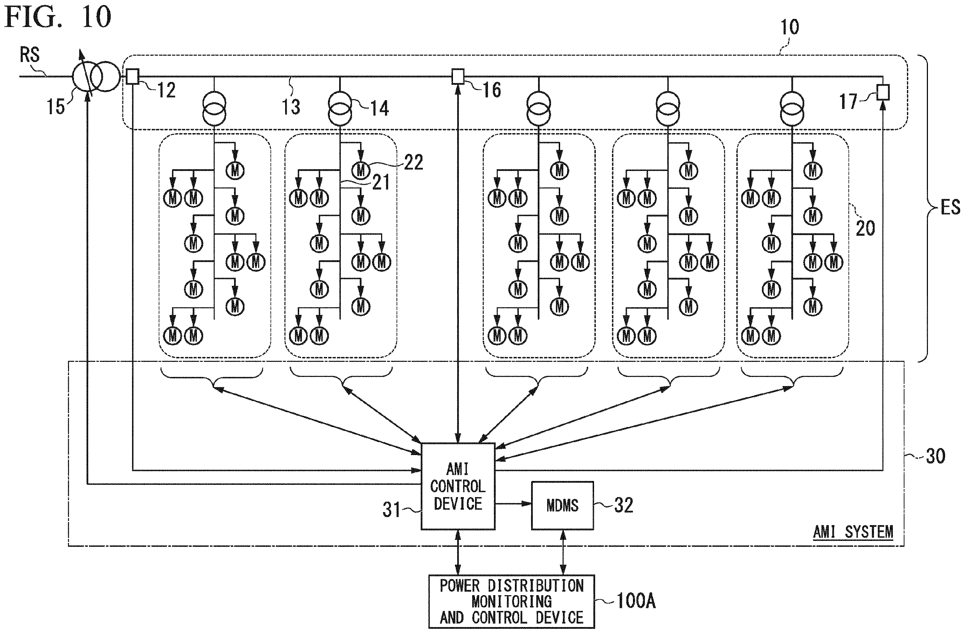

Hereinafter, a second embodiment will be described. Hereinafter, differences between the second embodiment and the first embodiment will be mainly described, and description of common points between the second embodiment and the first embodiment will be omitted. Fig. 10 is a diagram illustrating an example of the use environment of a power distribution monitoring and control device 100A according to the second embodiment. In the second embodiment, in the high voltage distribution line 13, a load tap changeover device (LRT) 15 is attached upstream of a transmission point, a line voltage regulator (SVR) 16 is attached at an arbitrary place, and a stationary reactive power compensation device (SVC) 17 is attached near a termination.

The load tap changeover device 15 includes a transformer, a changeover mechanism capable of switching between taps of windings in a state in which a load is applied to the transformer, and a driving device and an attachment device for the changeover mechanism. The line voltage regulator 16 similarly can switch between taps of the transformer to regulate a voltage. The stationary reactive power compensation device 17 controls the voltage of the high voltage distribution line 13 by controlling reactive power. The AMI control device 31 according to the second embodiment transmits a control command value to such a configuration having the reception function. Hereinafter, the load tap changeover device 15, the line voltage regulator 16, and the stationary reactive power compensation device 17 are collectively referred to as a voltage regulation device. A control command value given to the voltage regulation device may be determined under the control of the AMI control device 31 or may be determined on the basis of an instruction from the power distribution monitoring and control device 100A.

The monitoring controller 140 according to the second embodiment creates the voltage estimation equation by considering the control command value to be provided to the voltage regulation device when estimating the voltage measurement value of the smart meter 22 that is not a representative sensor through regression analysis. For example, the monitoring controller 140 according to the second embodiment obtains coefficients $a_{1i}$, $a_{2i}$, ..., and $c_{1i}$, $c_{2i}$, ... of the regression equation represented by Equation (5). In Equation (5), $u_q$ is a control command value for a q-th voltage regulation device. The control command value may be obtained by acquiring a value determined under the control of the AMI control device 31 via the communication interface 110 or may be a value that the power distribution monitoring and control device 100A instructs the AMI control device 31.

$$x_i = a_{1i} \cdot x_{p1} + a_{2i} \cdot x_{p2} + ... + c_{1i} \cdot u_1 + c_{2i} \cdot u_2 + ... + b_i \ ... \ (5)$$

Using the voltage estimation equation created in this manner, the monitoring controller 140 according to the second embodiment estimates the voltage measurement value of the smart meters 22 that are not the representative sensor. Further, for example, with respect to the smart meter 22 including both the smart meter 22 that is the representative sensor and the smart meter 22 that is not the representative sensor, when any one of the voltage measurement values (including both actual measurement values and estimated values) exceeds the upper limit value or falls below the lower limit value, the monitoring controller 140 according to the second embodiment may instruct the AMI control device 31 to output the control command value to some or all of the voltage regulation devices so that some or all of the voltage regulation devices regulate the voltage of the high voltage distribution line 13. Accordingly, it is possible to perform control so that the distribution voltage in the power distribution area falls within a desired range. In this case, the monitoring controller 140 according to the second embodiment may control the input and output 150 to perform an alert display or sound output, as in the first embodiment.

Further, when the voltage measurement value of the smart meter 22 that is the representative sensor exceeds the upper limit value or falls below the lower limit value, the monitoring controller 140 according to the second embodiment may instruct the AMI control device 31 to output the control command value to some or all of the voltage regulation devices so that some or all of the voltage regulation devices regulate the voltage of the high voltage distribution line 13. In this case, it is preferable for the upper limit value and the lower limit value to be set within a narrower range than the upper limit value and the lower limit value that are provided for both the actual measurement value and the estimated value. Accordingly, it is possible to perform control so that the distribution voltage in the power distribution area falls within a desired range, by simply using the voltage measurement value of the smart meter 22 that is the representative sensor. Further, in this case, the monitoring controller 140 according to the second embodiment may control the input and output 150 to perform an alert display or sound output, as in the first embodiment.

According to the power distribution monitoring and control device 100A of the second embodiment described above, it is possible to perform the estimation more accurately since the voltage measurement value of the smart meter 22 that is not a representative sensor is estimated by considering the control command value for the voltage regulation device, in addition to the same effects as in the first embodiment. Further, according to the power distribution monitoring and control device 100A of the second embodiment, it is possible to perform control so that the distribution voltage within the power distribution area falls within the desired range.

According to at least one of the embodiments described above, it is possible to select the representative sensor that outputs the voltage measurement value suitable for monitoring of the distribution of the distribution voltage by including the communication interface 110 that acquires the voltage measurement value measured by the plurality of smart meters 22 having a communication function installed in the power distribution system ES, and the representative sensor selector 130 that selects one or more representative sensors in which the voltage measurement value has a high degree of similarity with that of other sensors installed in the power distribution area EA in the power distribution system ES from one or more sensors installed in the power distribution area EA by referring to the voltage measurement value acquired by the communication interface 110.

Several embodiments of the present invention have been described, but the embodiments have been presented by way of example and are not intended to limit the scope of the invention. The embodiments may be embodied in various other forms and various omissions, substitutions, and changes can be made without departing from the gist of the invention. Such embodiments or modifications are included in the invention defined in the claims or the scope of equivalents thereof, as included in the scope or gist of the invention.

**Claims**

1. A power distribution monitoring and control device comprising:

    an acquirer that acquires voltage measurement values measured by a plurality of sensors having a communication function installed in a power distribution system; and
    a representative sensor selector that selects one or more representative sensors in which the voltage measurement value has a high degree of similarity with that of other sensors installed in a power distribution area in the power distribution system from one or more sensors installed in the power distribution area by referring to the voltage measurement values acquired by the acquirer.

2. The power distribution monitoring and control device according to claim 1, further comprising:

    a power distribution area determiner that groups the sensors in which the voltage measurement value has a high degree of similarity by referring to the voltage measurement values acquired by the acquirer, and determines an area in which the grouped sensors are installed as the power distribution area.

3. The power distribution monitoring and control device according to claim 2,
   wherein the power distribution area determiner calculates an index value indicating a degree of dissimilarity between the voltage measurement values by referring to the voltage measurement values acquired by the acquirer, and groups sensors in which the voltage measurement value has a high degree of similarity using hierarchical cluster analysis using the calculated index value indicating the degree of dissimilarity.

4. The power distribution monitoring and control device according to claim 1, further comprising: a monitoring controller that monitors a voltage distribution of the power distribution area on the basis of the voltage measurement values of the representative sensors selected by the representative sensor selector.

5. The power distribution monitoring and control device according to claim 4, wherein the monitoring controller estimates voltage measurement values of the sensors that are not a representative sensor, and monitors the voltage distribution of the power distribution area on the basis of both the voltage measurement value measured by the representative sensor and the estimated values of the voltage measurement values of the sensors that are not the representative sensor.

6. The power distribution monitoring and control device according to claim 5, comprising: an output that outputs information,
   wherein the monitoring controller outputs at least information from which the estimated values of the voltage measurement values of the sensors that are not the representative sensor is recognizable, to the output.

7. The power distribution monitoring and control device according to claim 4,
   wherein the distribution system includes a high voltage distribution system and a low voltage distribution system,
   the plurality of sensors are installed in the low voltage distribution system, and
   the monitoring controller controls a voltage regulation device attached to the high voltage distribution system so that the distribution voltage of the low voltage distribution system is within a desired range.

8. The power distribution monitoring and control device according to claim 4, wherein the monitoring controller estimates the voltage measurement values of the sensors that are not the representative sensor on the basis of the voltage measurement value of the representative sensor selected by the representative sensor selector and the control command value for the voltage regulation device attached to the power distribution system.

# FIG. 1

EP 3 276 788 A1

FIG. 2

# FIG. 3

```
            ┌─────────────────┐
            │      START       │
            └────────┬────────┘
                     │
                     ▼
         ┌──────────────────────┐
         │   ACQUIRE VOLTAGE    │──── S200
         │  MEASUREMENT VALUES  │
         └──────────┬───────────┘
                    │
                    ▼
         ┌──────────────────────┐
         │  CALCULATE DEGREE OF │
         │ SIMILARITY BETWEEN   │──── S202
         │   VOLTAGE            │
         │  MEASUREMENT VALUES  │
         └──────────┬───────────┘
                    │
                    ▼
         ┌──────────────────────┐
         │DETERMINE POWER       │
         │ DISTRIBUTION         │
         │  AREA AS UNIT AREA   │──── S204
         │ THAT IS MONITORING   │
         │        TARGET        │
         └──────────┬───────────┘
                    │
                    ▼
         ╱──────────────────────╲
        ╱    PROCESS IN EACH      ╲
        ╲  POWER DISTRIBUTION AREA╱
         ╲──────────┬────────────╱
                    │
                    ▼
         ┌──────────────────────┐
         │ SELECT REPRESENTATIVE│
         │    SENSOR IN POWER   │──── S206
         │  DISTRIBUTION AREA   │
         └──────────┬───────────┘
                    │
                    ▼
         ┌──────────────────────┐
         │   CREATE VOLTAGE     │──── S208
         │  ESTIMATION EQUATION │
         └──────────┬───────────┘
                    │
                    ▼
         ╲──────────────────────╱
          ╲────────┬───────────╱
                    │
                    ▼
         ┌──────────────────────┐
         │       REPLACE        │──── S210
         │ REPRESENTATIVE SENSOR│
         └──────────┬───────────┘
                    │
                    ▼
            ┌─────────────────┐
            │       END        │
            └─────────────────┘
```

# FIG. 4

# FIG. 5

FIG. 6

$r_{ij}$

| i＼j | 22A | 22B | 22C | 22D |
|---|---|---|---|---|
| 22A | | 0. 973 | 0. 929 | 0. 969 |
| 22B | 0. 973 | | 0. 984 | 0. 962 |
| 22C | 0. 929 | 0. 984 | | 0. 917 |
| 22D | 0. 969 | 0. 962 | 0. 917 | |

FIG. 7

FIG. 8

$y=1.3823x-0.3856$

# FIG. 9

```
        START
          │
          ▼
┌─────────────────────────┐
│ REQUEST ACQUISITION OF  │
│   VOLTAGE MEASUREMENT    │ ~S300
│      VALUE OF            │
│ REPRESENTATIVE SENSOR    │
└─────────────────────────┘
          │
          ▼
┌─────────────────────────┐
│ ACQUIRE VOLTAGE          │
│ MEASUREMENT VALUE OF     │ ~S302
│ REPRESENTATIVE SENSOR    │
└─────────────────────────┘
          │
          ▼
┌─────────────────────────┐
│ ESTIMATE VOLTAGE         │
│ MEASUREMENT VALUES OF    │ ~S304
│ SMART METERS THAT ARE    │
│ NOT REPRESENTATIVE SENSOR│
└─────────────────────────┘
          │
          ▼
┌─────────────────────────┐
│ OUTPUT INFORMATION FROM  │
│ WHICH BOTH VOLTAGE       │
│ MEASUREMENT VALUE OF     │
│ REPRESENTATIVE SENSOR AND│ ~S306
│ ESTIMATED VALUES OF      │
│ VOLTAGE MEASUREMENT      │
│ VALUES OF SMART METERS   │
│ THAT ARE NOT             │
│ REPRESENTATIVE SENSOR    │
│ ARE RECOGNIZABLE.        │
└─────────────────────────┘
          │
          ▼
         END
```

FIG. 10

## INTERNATIONAL SEARCH REPORT

International application No.

PCT/JP2016/059360

A. CLASSIFICATION OF SUBJECT MATTER
*H02J13/00*(2006.01)i, *H02J3/12*(2006.01)i

According to International Patent Classification (IPC) or to both national classification and IPC

B. FIELDS SEARCHED

Minimum documentation searched (classification system followed by classification symbols)
H02J13/00, H02J3/12

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2012-526515 A (Dominion Resouces, Inc.),<br>25 October 2012 (25.10.2012),<br>paragraphs [0042] to [0133]; fig. 1, 2<br>& US 2010/0286840 A1<br>paragraphs [0058] to [0127]; fig. 1, 2<br>& WO 2010/129691 A2 | 1-4,7<br>5,6,8 |
| Y<br>A | JP 2011-525787 A (International Business<br>Machines Corp.),<br>22 September 2011 (22.09.2011),<br>paragraphs [0039] to [0049]; fig. 3<br>& US 2009/0281679 A1<br>paragraphs [0032] to [0038]; fig. 3<br>& WO 2009/135940 A2 | 1-4,7<br>5,6,8 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 April 2016 (22.04.16) | Date of mailing of the international search report<br>10 May 2016 (10.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

18

**INTERNATIONAL SEARCH REPORT**

International application No.

PCT/JP2016/059360

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2012-7941 A (Fujitsu Ltd.),<br>12 January 2012 (12.01.2012),<br>paragraphs [0006] to [0009], [0026] to [0042];<br>fig. 1<br>(Family: none) | 1-4,7<br>5,6,8 |
| A | JP 2007-13983 A (NTT Docomo Inc.),<br>18 January 2007 (18.01.2007),<br>paragraphs [0038] to [0044]<br>& CN 1889486 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010129691 A